(19) Europäisches Patentamt
European Patent Office
Office européen des brevets

(11) **EP 4 443 324 B1**

(12) **EUROPEAN PATENT SPECIFICATION**

(45) Date of publication and mention
of the grant of the patent:
**18.02.2026 Bulletin 2026/08**

(21) Application number: **22912991.1**

(22) Date of filing: **14.03.2022**

(51) International Patent Classification (IPC):
*G06F 30/20* (2020.01)    *G06F 18/40* (2023.01)
*G06Q 50/06* (2024.01)    *G06F 16/9537* (2019.01)
*G06F 119/04* (2020.01)   *F03D 17/00* (2016.01)

(52) Cooperative Patent Classification (CPC):
**G06F 30/20; F03D 17/011;** F05B 2270/332;
G06F 2119/04; G06Q 50/06

(86) International application number:
**PCT/CN2022/080682**

(87) International publication number:
**WO 2023/123685 (06.07.2023 Gazette 2023/27)**

(54) **METHOD AND APPARATUS FOR EVALUATING SERVICE LIFE OF WIND POWER GENERATOR SET**

VERFAHREN UND VORRICHTUNG ZUR BEWERTUNG DER LEBENSDAUER EINES WINDKRAFTGENERATORSATZES

PROCÉDÉ ET APPAREIL D'ÉVALUATION DE LA DURÉE DE VIE D'UN ENSEMBLE GÉNÉRATEUR D'ÉNERGIE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2021 CN 202111612735**

(43) Date of publication of application:
**09.10.2024 Bulletin 2024/41**

(73) Proprietor: **Beijing Goldwind Science & Creation
Windpower Equipment Co. Ltd.
Beijing 100176 (CN)**

(72) Inventors:
• **MI, Yuxia
Beijing 100176 (CN)**
• **ZHANG, Pengfei
Beijing 100176 (CN)**
• **ZHAO, Shipei
Beijing 100176 (CN)**
• **HAN, Wei
Beijing 100176 (CN)**

(74) Representative: **Gulde & Partner
Patent- und Rechtsanwaltskanzlei mbB
Berliner Freiheit 2
10785 Berlin (DE)**

(56) References cited:
WO-A1-2020/200421   WO-A1-2020/200421
CN-A- 103 547 976   CN-A- 105 701 337
CN-A- 112 131 753   CN-A- 113 821 979
KR-B1- 101 706 508

## EP 4 443 324 B1

**Description**

**FIELD**

The present disclosure relates to the field of wind power generation, and in particular to a method and a service life evaluation device for a wind turbine.

**BACKGROUND**

Typically, a wind turbine has a design life of 20 years. At present, the operating time of a large number of wind turbines has reached or is about to reach the design life. Wind zones of the wind turbine are designed based on the IEC61400-1 standard, and wind farms are designed based on design loads. Hence, the cases that the wind resource condition in which the wind turbine actually operates is lower than a design condition, or other unforeseen cases, may cause the actual service life of the wind turbine to be inconsistent with the design life. Therefore, how to reliably evaluate the service life of the wind turbine based on an environment where the wind turbine is located and the condition in which the wind turbine actually operates is a problem to be urgently solved.

Patent application WO 2020200421 A1 discloses a method for estimating remaining useful life of components of an operational wind turbine. The disclosed method includes: extracting historical data from the data acquisition module at time intervals, identify operational states of the wind turbine, validate the identified operational states and identify uncertain data that do not match. Next, simulate a turbine model for each operational state identified and wind condition thereof at each time interval, and calculate a fatigue equivalent load for each operational state and wind condition.

Patent application CN112131753A discloses an evaluation method, system and equipment for fatigue life of a wind turbine. The disclosed method includes: generating a parameter combination, including an environment parameter combination and a control parameter combination, of a wind farm suitable for a wind turbine, and obtaining equivalent fatigue load samples of the wind turbine in a full life cycle under different parameter combinations so as to form first load sample data which is used for model training, and second load sample data which is used for model verification; establishing a fatigue load model according to the parameter combination and the equivalent fatigue load sample, and training the fatigue load model by using the first load sample data; verifying the trained fatigue load model by utilizing the second load sample data; and taking the environmental parameters and the control parameters in the evaluation period as input, and evaluating the fatigue life occupied by the evaluation period through the verified fatigue load model so as to obtain the fatigue life of the wind turbine.

**SUMMARY**

In view of this, how to reasonably utilize field data of a wind turbine is crucial to reliably evaluate the service life of the wind turbine.

In a general aspect, a service life evaluation method for a wind turbine is provided. The service life evaluation method includes: acquiring historical data of the wind turbine over a target historical period, where the historical data includes historical operating data; performing classification on the historical operating data to classify the historical operating data into different operating state categories, and classifying other data in the historical data into operating state categories to which corresponding historical operating data belongs; determining, based on time information to which the historical operating data corresponds, a time proportion of each of the operating state categories and recording as a first proportion; determining an equivalent fatigue load corresponding to each operating state category based on historical data in each operating state category; adding the equivalent fatigue loads corresponding to respective operating state categories together based on the first proportions to obtain an equivalent fatigue load of the wind turbine; and determining a consumed service life of the wind turbine over the target historical period based on the equivalent fatigue load of the wind turbine.

In another general aspect, a service life evaluation device for a wind turbine is provided. The service life evaluation device includes an acquisition unit, a classification unit, a timing unit, an equivalent unit, an adding unit, and an evaluating unit. The acquisition unit is configured to acquire historical data of the wind turbine over a target historical period, where the historical data includes historical operating data. The classification unit is configured to perform classification on the historical operating data to classify the historical operating data into different operating state categories, and classify other data in the historical data into operating state categories to which corresponding historical operating data belongs. The timing unit is configured to determine, based on time information to which the historical operating data corresponds, a time proportion of each of the operating state categories and record as a first proportion. The equivalent unit is configured to determine, an equivalent fatigue load corresponding to each operating state category based on the historical data in the operating state category. The adding unit is configured to add the equivalent fatigue loads corresponding to respective operating state categories together based on the first proportions to obtain an equivalent fatigue load of the wind turbine.

The evaluating unit is configured to determine a consumed service life of the wind turbine over the target historical period based on the equivalent fatigue load of the wind turbine.

In another general aspect, a computer-readable storage medium is provided. The instructions in computer-readable storage medium, when executed by at least one processor, cause the at least one processor to perform the foregoing service life evaluation method.

In another general aspect, a computer device is provided. The computer device includes at least one processor and at least one memory storing computer-executable instructions. The computer-executable instructions, when executed by the at least one processor, cause the at least one processor to perform the foregoing service life evaluation method.

According to the present disclosure, the historical data including the historical operating data, which is meant to be acquired during the operation of the wind turbine, is used in evaluating the service life of the wind turbine. First, the historical data is classified to obtain historical data in different operating state categories and the time proportions of different operating state categories. Then, for each of the operating state categories, the equivalent fatigue load corresponding to the operating state category is determined based on the historical data in the operating state category, and these equivalent fatigue loads are added together based on the time proportions, to obtain the equivalent fatigue load of the wind turbine, which comprehensively reflects the historical operation situation of the wind turbine. Finally, the consumed service life of the wind turbine is evaluated based on the equivalent fatigue load. The equivalent fatigue load corresponding to each of different operating states is determined separately, improving accuracy of the evaluation result. The equivalent fatigue loads are added together based on the time proportions, so that the evaluation results for different operating states can be effectively integrated, and on-site operating conditions can be analyzed by fully utilizing the field data of the wind turbine, which helps to improve the reliability of service life evaluation, providing a reference for the safety and a future development direction of on-site wind turbine.

It should be understood that the above general descriptions and the following detailed descriptions are merely for exemplary and explanatory purposes, and do not intent to limit the present disclosure.

## BRIEF DESCRIPTION OF THE DRAWINGS

Figure 1 is a flowchart illustrating a service life evaluation method for a wind turbine according to an embodiment of the present disclosure;

Figure 2 is a schematic flowchart illustrating a service life evaluation method for a wind turbine according to an embodiment of the present disclosure;

Figure 3 is a block diagram illustrating a service life evaluation device for a wind turbine according to an embodiment of the present disclosure; and

Figure 4 is a block diagram illustrating a computer device according to an embodiment of the present disclosure.

## DETAILED DESCRIPTION OF EMBODIMENTS

Specific embodiments are provided below to help readers to gain a comprehensive understanding of the method, device, and/or system described herein. After understanding the present disclosure, various changes, modifications, and equivalents of the method, device, and/or system described herein would be clear. For example, an order of operations described herein is only an example and is not limited to those described herein, but may be changed as would be clear after understanding the present disclosure, except for operations that must occur in a specific order. In addition, description of features known in the art may be omitted, for clarity and conciseness.

The features described herein may be implemented in different forms and should not be limited to the examples described herein. On the contrary, the examples described herein are provided to illustrate only some of feasible ways of implementing the method, device, and/or system described herein, and many other feasible ways would be clear after understanding the present disclosure.

As used herein, term "and/or" includes any one of listed items associated with the term, and any combination of any two or more of the items.

Although terms "first," "second," "third" and the like may be used herein to describe various members, components, regions, layers, or parts, these members, components, regions, layers, or parts should not be limited by these terms. On the contrary, these terms are only used to distinguish one member, component, region, layer, or part from another member, component, region, layer, or part. Therefore, without departing from the teachings of the examples, a first member, first component, first region, first layer, or first part referred to in the examples described herein may alternatively be referred to as a second member, second component, second region, second layer, or second part.

In the specification, an element (such as a layer, region, or substrate) described as being "on", "connected to", or "bonded to" another element may be directly "on", "connected to", or "bonded to" another element, or there may be one or more other elements between the two elements. On the contrary, when an element is described as "directly on" another element, "directly connected to" or "directly bonded to" another element, there may be no other elements between the two elements.

The terms used herein are only for describing various examples and are not intended to limit the present disclosure. Unless clearly indicated in the context otherwise, a singular form is also intended to include a plural form. Terms "include", "comprise", and "have" indicate existence of a mentioned feature, quantity, operation, component, element, and/or combination thereof, but do not exclude existence or addition of one or more other features, quantities, operations, components, elements, and/or combinations thereof.

Unless otherwise defined, all terms used herein (including technical terms and scientific terms) have the same meanings as those commonly understood by those skilled in the art to which the present disclosure pertains after understanding the present disclosure. Unless explicitly defined otherwise, terms (such as those defined in a general dictionary) should be interpreted as having meanings consistent with their respective contexts in the relevant field and in the present disclosure, and should not be interpreted ideally or too formally.

In addition, in the description of the examples, detail description of well-known relevant structures or functions are omitted, when it is believed that the detailed description may lead to ambiguity of the present disclosure.

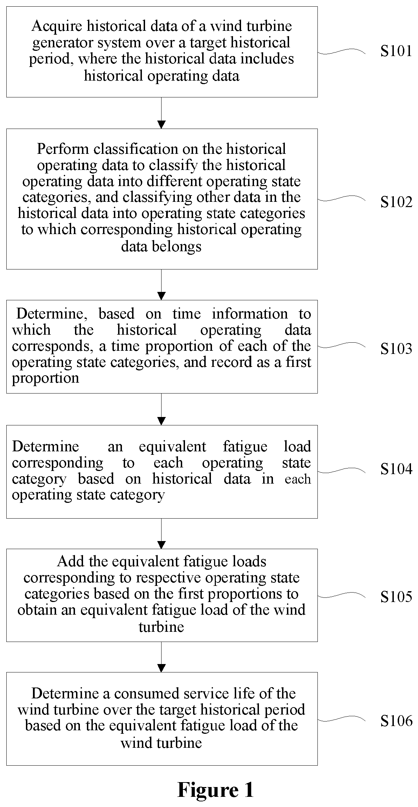

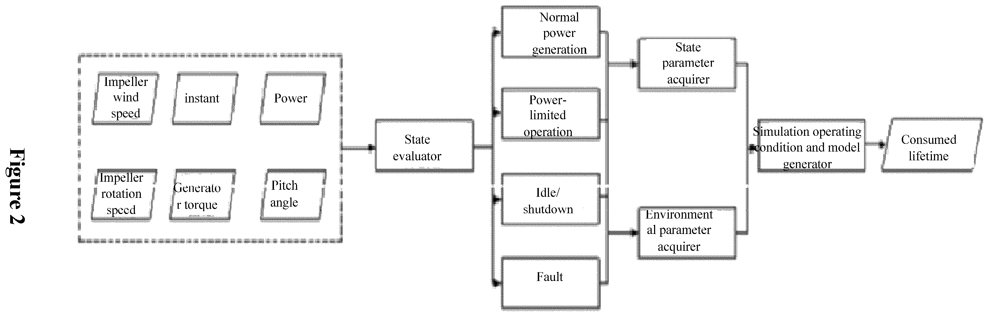

Figure 1 is a flowchart illustrating a service life evaluation method for a wind turbine according to an embodiment of the present disclosure. Figure 2 is a schematic flowchart illustrating a service life evaluation method for a wind turbine according to an embodiment of the present disclosure.

Referring to Figure 1, in step S101, historical data of the wind turbine over a target historical period is acquired, and the historical data includes historical operating data. In this step, the historical data including the historical operating data of the wind turbine is acquired as a basis for evaluating the service life of the wind turbine. Specifically, the historical data may include multiple parameters, and the historical data may be grouped according to time instants when parameter data is acquired. For example, data acquired at a same time instant (allowing a time error due to accuracy) is determined as one group of historical data. It should be noted that the target historical period may cover the entire period from a time instant when the wind turbine is commissioned to a current time instant, in order to more comprehensively and accurately evaluate the service life of the wind turbine. Alternatively, the target historical period may be a particular period, so that in the case of non-first time evaluation, data in the non-evaluated target historical period is processed first, and then is combined with a processing result of data in the previously evaluated historical period to comprehensively evaluate the service life of the wind turbine, thereby reducing amount of data processing.

Optionally, the historical operating data specifically refers to data from a supervisory control and data acquisition (SCADA) system, and includes at least one of an impeller wind speed, a power, an impeller rotation speed, a generator torque, a pitch angle, a yaw angle, a failure number, and a failure type, which can fully reflect an operating condition of the wind turbine, and facilitate to improve the reliability of the service life evaluation result. In addition, since the data is meant to be acquired during the operation of the wind turbine, additional data acquisition is omitted and additional deployment of data acquisition sensors is omitted, which can reduce product costs, reduce time consumption of service life evaluation, thereby improving economic performance.

In step S102, classification is performed on the historical operating data to classify the historical operating data into different operating state categories, and other data in the historical data is classified into operating state categories to which corresponding historical operating data belongs.

Optionally, the classification on the historical operating data includes performing clustering on at least part of the historical operating data, to classify the historical operating data into different operating state categories. During the operation of the wind turbine, the wind turbine is not always in a normal power generation state and often operates in a power-limited state or unavoidably fails due to the impact of external conditions. If the service life of the wind turbine is evaluated without distinguishing operating states of the wind turbine, the evaluation result is inevitably inaccurate. In addition, a controller actively controls the operating states of the wind turbine based on an operation requirement. For example, in absence of power-limiting command, the controller controls the wind turbine for normal power generation; and on receipt of the power-limiting command, the controller controls the wind turbine to shutdown or operate in the power-limited state. However, an actual operation process of the wind turbine is delicate and complex, and is often not completely consistent with a state required by the control command due to the impact of a response speed, surrounding environment, and the like. From the historical operating data, data that reflects actual operating states of the wind turbine is selected and subjected to clustering. By means of clustering algorithm, operating state categories of respective groups of historical data can be determined, which helps to evaluate the service life of the wind turbine under different operating conditions, thereby improving the accuracy of the evaluation result.

Optionally, the at least part of the historical operating data for clustering includes the impeller wind speed, the power, the impeller rotation speed, the generator torque, and the pitch angle.

Specifically, referring to Figure 2, for the historical operating data at a time instant t, an array including the impeller wind speed $Wsp_t$, the power $Pwr_t$, the impeller rotation speed $r_t$, the generator torque $T_t$, and the pitch angle $Pa_t$ is inputted into a state evaluator for the wind turbine, to evaluate the operating state of the wind turbine at this time instant (as shown in Figure 2, the time instant t is also inputted for distinguishing data at different time instants). The operating states may be classified into four categories, that is, a normal power generation state, a power-limited operating state, an idle/shutdown state, and a fault state, which basically covers all operating states of the wind turbine. Parameters of the wind turbine in various states are as follows.

$$Status \begin{pmatrix} Wsp_{cutin} < Wsp_t < Wsp_{cutout} \\ r_t > 0 \\ T_t > 0 \\ 0 \leq Pa_t < 90^{\circ} \\ Pwr_t > 0 \\ Pwr_t \geq Pwr_{ideal} \end{pmatrix} \in$$

normal power generation state

$$Status \begin{pmatrix} Wsp_{cutin} < Wsp_t < Wsp_{cutout} \\ r_t > 0 \\ T_t > 0 \\ 0 \leq Pa_t < 90^{\circ} \\ Pwr_t > 0 \\ Pwr_t < Pwr_{ideal} \end{pmatrix} \in$$

power-limited operating state

$$Status \begin{pmatrix} r_t = 0 \\ T_t = 0 \\ Pwr_t \leq 0 \end{pmatrix} \in$$

idle/shutdown state

$$Status \begin{pmatrix} Wsp_{cutin} < Wsp_t < Wsp_{cutout} \\ r_t = 0 \\ T_t = 0 \\ Pwr_t \leq 0 \end{pmatrix} \in$$

fault state

$Wsp_{cutin}$ represents a cut-in wind speed of the wind turbine, $Wsp_{cutout}$ represents a cut-out wind speed of the wind turbine, $Pwr_{ideal}$ represents a designed theoretical active power of the wind turbine under a wind speed at the time instant t.

The historical operating data of the wind turbine is classified with a clustering algorithm. In the following, the clustering process is introduced by taking a Fuzzy C-means (FCM) algorithm as an example.

As described above, the operating states are classified into four categories. First, initial clustering center positions are configured by basing on features of respective states and making the center positions as far apart as possible. As shown below, $v_1$ represents an initial clustering center position of the normal power generation state, $v_2$ represents an initial clustering center position of the power-limited operating state, $v_3$ represents an initial clustering center position of the idle/shutdown state, and $v_4$ represents an initial clustering center position of the fault state. A subscript r represents a rated parameter of the wind turbine; a, b, and c represent power-limiting proportion coefficients, which may be obtained based on a previous control strategy for the wind turbine or assumed proportionally. Since the inputs are in different orders of magnitude, the data is normalized first before clustering.

$$V = \begin{bmatrix} v_1 \\ v_2 \\ v_3 \\ v_4 \end{bmatrix} = \begin{bmatrix} Wsp_r & r_r & T_r & Pa_r & Pwr_r \\ Wsp_r & ar_r & bT_r & Pa_r & cPwr_r \\ 0 & 0 & 0 & 90^\circ & 0 \\ Wsp_r & 0 & 0 & Pa_r & 0 \end{bmatrix}$$

A probability that each data point belongs to a category is calculated by using S-shaped or Gaussian-shaped membership function, forming a membership degree matrix. Assuming there are n data points, the membership degree matrix is shown below. A sum of membership degrees of one data point is 1, that is, a sum of each column of data in the membership degree matrix is 1.

$$U = \begin{bmatrix} u_{11} & u_{12} & \cdots & u_{1n} \\ u_{21} & u_{22} & \cdots & u_{2n} \\ u_{31} & u_{32} & \cdots & u_{3n} \\ u_{41} & u_{42} & \cdots & u_{4n} \end{bmatrix}$$

An Euclidean distance between each data point and the center point is calculated by using the following fifth-dimensional space equation:

$$d_{ij} = \sqrt{\left(x_{ij} - x_0\right)^2 + \left(y_{ij} - y_0\right)^2 + \left(z_{ij} - z_0\right)^2 + \left(w_{ij} - w_0\right)^2 + \left(h_{ij} - h_0\right)^2}$$

Where, $i$ represents a sequence number of the operating state category, and $j$ represents a sequence number of the data point. The membership degree serves as a weight and a minimum weighted distance serves as an objective function, and an optimal clustering center position and classification for each of the states are obtained through multiple iterations. The objective function is expressed as follows.

$$min\left( \sum_{i}^{4} \sum_{j}^{n} u_{ij}^m d_{ij}^2 \right)$$

Where, m represents a membership degree factor, and is usually 2. It should be noted that the membership degree factor m is different from a material Wall coefficient m described later, both of which are commonly represented by the letter m in their respective technical fields.

With the clustering as described above, training is performed with respect to the historical operating data of the wind turbine to obtain categories corresponding to four operating states, i.e., the normal power generation state, the power-limited operating state, the idle/shutdown state, and the fault state. Then, the membership degree (i.e., the probability that the data belongs to a state at the time instant t) is calculated for the historical operating data of the wind turbine of interest. The following equation shows the membership degrees of the data as for the four operating states at the time instant t. The operating state of the wind turbine at the time instant t is classified based on a maximum one in the comparison among the four membership degrees. For example, if a membership degree $p_{1t}$ corresponding to the normal power generation state is maximum, it is determined that the wind turbine is in the normal power generation state at the time instant t.

$$P_t = \begin{bmatrix} p_{1t} \\ p_{2t} \\ p_{3t} \\ p_{4t} \end{bmatrix}$$

It should be understood that historical operating data may be grouped according to time instants when the data is acquired. If only some parameters are subjected to clustering, that is, the group of historical operating data include data that does not participate in the clustering, then the data that does not participate in the clustering may be classified, based on the time instants for acquiring the data, into the same operating state category as the data which is acquired at the same time instants and participates in the clustering.

Optionally, the historical data further includes historical wind resource data, and the historical wind resource data is in temporal correspondence with the historical operating data. It should be understood that the historical operating data reflecting the operation of the wind turbine is generally acquired by a same data acquisition system (for example the SCADA system as described above) at the same time instant (allowing a time error as described above), while the historical wind resource data reflecting an operating environment is generally acquired by another data acquisition system (for example an anemometer tower system) with an even greater time error. Therefore, the so called temporal correspondence herein may refer to the case that the historical wind resource data and the historical operating data belong to a same period, allowing an appropriately expanded error range and ensuring the correspondence between the historical wind resource data and the historical operating data. Based on this, in step S102, the historical wind resource data may be classified into operating state categories of the historical operating data in temporal correspondence with the historical wind resource data.

In step S103, based on time information to which the historical operating data corresponds, a time proportion of each of the operating state categories is determined and recorded as a first proportion. The historical operating data usually includes time information, and historical operating data at a same time instant belongs to a same operating state category. Therefore, for each of the operating state categories, periods in which the operating state category appears are determined based on the time information of the historical operating data in the operating state category, and a ratio of the periods in which the operating state category appears to the target historical period is calculated as the first proportion of the operating state category. The first proportion may reflect a time distribution of each of different operating states over the target historical period. It should be understood that a sum of first proportions of respective operating state categories is equal to 1. Specifically, the historical operating data may be imported into a state parameter acquirer shown in Figure 2 to obtain the first proportions.

In step S104, an equivalent fatigue load corresponding to each operating state category is determined based on historical data in each operating state category. Determining the equivalent fatigue load under a same operating state category for reflecting an operating consumption of the wind turbine can ensure a similar operating condition and improve the accuracy of the determined equivalent fatigue load.

Optionally, step S104 may specifically include selecting a first reference parameter from the historical data; constructing, based on the historical data in each of the operating state categories, multiple parameter bins associated with different value intervals of the first reference parameter, where each parameter bin includes a feature vector of the historical data corresponding to the first reference parameter in the value interval associated with the parameter bin; and determining an equivalent fatigue load corresponding to each operating state category based on the multiple parameter bins. The historical data in each of the operating state categories is classified into multiple parameter bins based on the first reference parameter, further subdividing the operating conditions, thereby improving accuracy of the equivalent fatigue load. In addition, for the four operating state categories, i.e., the normal power generation state, the power-limited operating state, the idle/shutdown state, and the fault state, when the wind turbine fails, the wind turbine is often in the idle or shutdown state, hence the fault state can be classified as the idle/shutdown state. In this case, the calculation is only performed on three operating state categories, which can reduce the number of classifications.

Specifically, the first reference parameter is, for example, the impeller wind speed. During the bin classification, the impeller wind speed is divided into n ranges corresponding to n parameter bins. Each of the n parameter bins includes a parameter feature value of the corresponding historical data. The parameter feature value is, for example, an average, a maximum, a minimum, variance, or the like of a same parameter. In one parameter bin, feature values of all parameters for the historical data are summarized to form the feature vector.

Furthermore, the historical data includes the historical operating data and the historical wind resource data as described above. The historical wind resource data includes a second reference parameter having a value corresponding relation with the first reference parameter. That is, the first reference parameter can be converted into the second reference parameter based on the correspondence. Therefore, the historical operating data can be associated with the historical wind resource data based on the value corresponding relation between the first reference parameter and the second reference parameter.

Based on this, the constructing multiple parameter bins may include: classifying, for each of operating state categories, the feature vectors of the historical operating data into bins according to different value intervals of the first reference parameter, to obtain multiple initial parameter bins. For example, from the impeller wind speed $Wsp$, the power $Pwr$, the impeller rotation speed $r$, the generator torque $T$, the pitch angle $Pa$, the yaw angle $Yaw$, the failure number $Ft\_N$, and the failure type $Ft$ in step S101, the impeller wind speed $Wsp$ is selected as the first reference parameter. First, the historical operating data is classified according to different value intervals of the impeller wind speed $Wsp$, and parameter feature values of the historical operating data in each of the value intervals are determined, to obtain multiple initial parameter bins for describing the operating states of the wind turbine.

| bin | $W_{SP}$ | Pwr | r | T | Pa | Yaw | Ft_N | Ft |
|-----|----------|-----|---|---|----|----|------|-----|
| 1 | $Wsp_1$ | $Pwr_1$ | $r_1$ | $T_1$ | $Pa_1$ | $Yaw_1$ | $Ft\_N_1$ | $Ft_1$ |
| 2 | $Wsp_2$ | $Pwr_3$ | $r_2$ | $T_2$ | $Pa_2$ | $Yaw_2$ | $Ft\_N_2$ | $Ft_2$ |
| 3 | $Wsp_3$ | $Pwr_3$ | $r_3$ | $T_3$ | $Pa_3$ | $Yaw_3$ | $Ft\_N_3$ | $Ft_3$ |
| ⋮ | ⋮ | ⋮ | ⋮ | ⋮ | ⋮ | ⋮ | ⋮ | ⋮ |
| n | $Wsp_n$ | $Pwr_n$ | $r_n$ | $T_n$ | $Pa_n$ | $Yaw_n$ | $Ft\_N_n$ | $Ft_n$ |

Next, for each of the operating state categories, the correspondence between the historical wind resource data and the multiple initial parameter bins is determined based on the value corresponding relation between the second reference parameter and the first reference parameter, and the historical wind resource data is classified into the multiple initial parameter bins to expand the multiple initial parameter bins to obtain multiple parameter bins. For example, the historical wind resource data includes a wind speed $Wsp_{in}$, an air density $Air$, an inflow angle $Inflow$, a wind shear $Shear$, and turbulence intensity $ti$. The turbulence intensity $ti$ may be calculated based on a standard deviation and an average of the wind speed $Wsp_{in}$. In addition, referring to IEC 61400-12-2, the impeller wind speed $Wsp$ may be converted to the wind speed $Wsp_{in}$ of incoming wind acting on the impeller, and thus the wind speed $Wsp_{in}$ may serve as the second reference parameter. In expanding the initial parameter bins, the impeller wind speed $Wsp$ corresponding to the wind speed $Wsp_{in}$ may be calculated first. Since each of the initial parameter bins corresponds to a value interval of the impeller wind speed $Wsp$, a value interval of the wind speed $Wsp_{in}$ corresponding to each value interval of the impeller wind speed $Wsp$ may be determined. The historical wind resource data, similarly reflecting the operating environment, is often acquired by a same data acquisition system (such as the anemometer tower system) at a same time instant (which may have a certain error, similar to the case of the historical operating data), and thus the historical wind resource data is in temporal correspondence with the historical operating data. Therefore, the historical wind resource data can be associated with respective initial parameter bins based on the different value intervals of the wind speed $Wsp_{in}$, thereby classifying the historical wind resource data into the initial parameter bins. Subsequently, feature values of each parameter are determined for the historical wind resource data corresponding to each of the initial parameter bins, to obtain the feature vector, expanding the initial parameter bins to obtain multiple parameter bins as follows:

| bin | Wsp | Pwr | r | T | Pa | Yaw | Ft_N | Ft | Air | Inflow | Shear | Wspin | ti |
|-----|-----|-----|---|---|----|----|------|-----|-----|--------|-------|-------|-----|
| 1 | $Wsp_1$ | $Pwr_1$ | $r_1$ | $T_1$ | $Pa_1$ | $Yaw_1$ | $Ft\_N_1$ | $Ft_1$ | $Air_1$ | $Inflow_1$ | $Shear_1$ | $Wsp_{in.1}$ | $ti_1$ |
| 2 | $Wsp_2$ | $Pwr_3$ | $r_2$ | $T_2$ | $Pa_2$ | $Yaw_2$ | $Ft\_N_2$ | $Ft_2$ | $Air_2$ | $Inflow_2$ | $Shear_2$ | $Wsp_{in.2}$ | $ti_2$ |
| 3 | $Wsp_3$ | $Pwr_3$ | $r_3$ | $T_3$ | $Pa_3$ | $Yaw_3$ | $Ft\_N_3$ | $Ft_3$ | $Air_3$ | $Inflow_3$ | $Shear_3$ | $Wsp_{in.3}$ | $ti_3$ |
| ⋮ | ⋮ | ⋮ | ⋮ | ⋮ | ⋮ | ⋮ | ⋮ | ⋮ | ⋮ | ⋮ | ⋮ | ⋮ | ⋮ |
| n | $Wsp_n$ | $Pwr_n$ | $r_n$ | $T_n$ | $Pa_n$ | $Yaw_n$ | $Ft\_N_n$ | $Ft_n$ | $Air_n$ | $Inflow_n$ | $Shear_n$ | $Wsp_{in.n}$ | $ti_n$ |

Specifically, the state parameter acquirer shown in Figure 2 may not only acquire the first proportions, but also acquire the initial parameter bins. In addition, the historical wind resource data may be imported into an environmental parameter acquirer shown in Figure 2, to classify the historical wind resource data into the initial parameter bins, so that the initial parameter bins are expanded by combining results of the two acquirers, thereby obtaining the final parameter bins.

Optionally, in step S104, determining the equivalent fatigue load corresponding to the operating state category based on multiple parameter bins may include: performing simulation calculation for each parameter bin to obtain an equivalent fatigue load of each parameter bin; determining, based on time information of historical data corresponding to each parameter bin, a time proportion of each parameter bin and recording as a second proportion; and adding the equivalent fatigue loads of respective parameter bins together based on the second proportions to obtain the equivalent fatigue load corresponding to the operating state category. The simulation calculation is performed on each of the parameter bins, to obtain the equivalent fatigue load of each parameter bin under the corresponding operating condition. Similar to the way of determining the first proportions, time proportions of respective parameter bins in an operating state category may be determined as the second proportions. The second proportions reflect time distributions of operating conditions corresponding to different parameter bins in the current operating state category. The equivalent fatigue load of the parameter bin usually varies with the operating condition. For an operating state category, the equivalent fatigue loads of respective parameter bins are added together based on the second proportions, so that evaluation results of the multiple parameter bins can be reasonably combined, to obtain the equivalent fatigue load of the operating state category, improving the accuracy of the equivalent fatigue load. The detailed scheme for implementing the adding may be referred to the subsequent step S105, which is not repeated herein.

In step S105, the equivalent fatigue loads corresponding to respective operating state categories are added together based on the first proportions, to obtain the equivalent fatigue load of the wind turbine. The first proportions reflect the time distribution of different operating states over the target historical period, and the equivalent fatigue load usually varies with the operating state. The equivalent fatigue loads corresponding to respective operating state categories are added together based on the first proportions, so that evaluation results of the multiple operating state categories can be reasonably combined, and the equivalent fatigue load of the wind turbine over the target historical period can be obtained, improving the accuracy of the equivalent fatigue load of the wind turbine

Optionally, step S105 specifically includes: determining, for each of the operating state categories, a product of an m-th power of the equivalent fatigue load and the first proportion, and summing up the products corresponding to respective operating state categories to obtain a reference load, where m represents a material Wall coefficient of a target component of the wind turbine; determining a (1/m)-th power of the reference load as the equivalent fatigue load of the wind turbine. With the scheme for implementing the adding, the obtained equivalent fatigue load of the wind turbine can more reliably reflect wears of the wind turbine. The target component is a component that is prone to wear and tear in the wind turbine, and a service life of the target component is a representative of the service life of the entire wind turbine, and is expressed by the following equation:

$$\mathrm{DEQ_{site}} = \sqrt[m]{\sum_i^3 L_{DEQ_{\mathrm{site},i}} L_i^m}$$

Where, $\mathrm{DEQ_{site}}$ represents the equivalent fatigue load of the wind turbine, $L_{\mathrm{DEQ_{site,i}}}$ represents the equivalent fatigue load corresponding to an operating state category $i$, and $L_i$ represents a first proportion of the operating state category $i$. It should be noted that the fault state is classified as the idle/shutdown state, and thus the number of the operating state categories here is reduced to 3.

In step S106, the consumed service life of the wind turbine over the target historical period is determined based on the equivalent fatigue load of the wind turbine. Specifically, a ratio of a design equivalent fatigue load of the wind turbine to the equivalent fatigue load of the wind turbine is determined first, and an m-th power of the ratio is calculated. In addition, a ratio of an actual operating duration of the wind turbine to the design life of the wind turbine is determined. A product of the two is calculated as the consumed service life as follow:

$$\mathrm{lifetime} = \left(\frac{\mathrm{DEQ_{design}}}{\mathrm{DEQ_{site}}}\right)^m \times \frac{\mathrm{year_{site}}}{\mathrm{year_{design}}}$$

Where, lifetime represents the consumed service life, $\mathrm{DEQ_{design}}$ represents the design equivalent fatigue load of the wind turbine, $\mathrm{year_{site}}$ represents the actual operating duration of the wind turbine, and $\mathrm{year_{design}}$ represents the design life of the wind turbine.

With the service life evaluation method for a wind turbine according to the embodiments of the present disclosure, the historical data including the historical operating data, which is meant to be acquired during the operation of the wind turbine, is used in evaluating the service life of the wind turbine. First, the historical data is classified to obtain historical data in different operating state categories and the time proportions of different operating state categories. Then, for each of the operating state categories, the equivalent fatigue load corresponding to the operating state category is determined based on the historical data in the operating state category, and these equivalent fatigue loads are added together based on the time proportions, to obtain the equivalent fatigue load of the wind turbine, which comprehensively reflects the historical operation situation of the wind turbine. Finally, the consumed service life of the wind turbine is evaluated based on the equivalent fatigue load. The equivalent fatigue load corresponding to each of different operating states is determined separately, improving accuracy of the evaluation result. The equivalent fatigue loads are added together based on the time proportions, so that the evaluation results for different operating states can be effectively integrated, and on-site operating conditions can be analyzed by fully utilizing the field data of the wind turbine, which helps to improve the reliability of service life evaluation, providing a reference for the safety and a future development direction of on-site wind turbine.

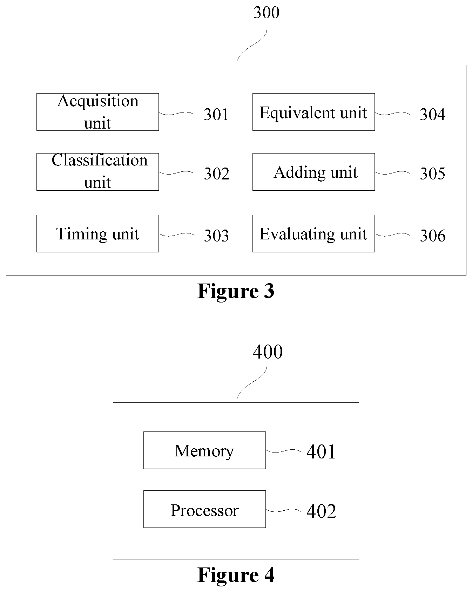

Figure 3 is a block diagram illustrating a service life evaluation device for a wind turbine according to an embodiment of the present disclosure.

As shown in Figure 3, the service life evaluation device 300 for a wind turbine includes an acquisition unit 301, a classification unit 302, a timing unit 303, an equivalent unit 304, an adding unit 305, and an evaluating unit 306.

The acquisition unit 301 is configured to acquire historical data of the wind turbine over a target historical period, where the historical data includes historical operating data.

The classification unit 302 is configured to perform classification on the historical operating data to classify the historical operating data into different operating state categories, and classify other data in the historical data into operating state categories to which corresponding historical operating data belongs.

The timing unit 303 is configured to determine, based on time information to which the historical operating data corresponds, a time proportion of each of the operating state categories and record the time proportion of each of the operating state categories as a first proportion.

The equivalent unit 304 is configured to determine an equivalent fatigue load corresponding to each operating state category based on the historical data in the operating state category.

The adding unit 305 is configured to add the equivalent fatigue loads corresponding to respective operating state categories together based on the first proportions to obtain an equivalent fatigue load of the wind turbine.

The evaluating unit 306 is configured to determine a consumed service life of the wind turbine over the target historical period based on the equivalent fatigue load of the wind turbine.

In the service life evaluation device 300 for a wind turbine according to the embodiment of the present disclosure, operations performed by various units are in one-to-one correspondence with the forgoing service life evaluation method for a wind turbine according to the embodiment of the present disclosure, and thus have all the beneficial effects of the service life evaluation method. The beneficial effects are not repeated herein.

The service life evaluation method for a wind turbine according to the embodiment of the present disclosure may be written as a computer program and stored on a computer-readable storage medium. Instructions corresponding to the computer program, when executed by a processor, can implement the foregoing service life evaluation method for a wind turbine. Examples of the computer-readable storage medium include: read-only memory (ROM), random-access programmable read-only memory (PROM), electrically erasable programmable read-only memory (EEPROM), random-access memory (RAM), dynamic random-access memory (DRAM), static random-access memory (SRAM), flash memory, nonvolatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, Blu-ray or optical disk memory, hard disk drive (HDD), solid state hard disk (SSD), card-type memory (such as a multimedia card, a secure digital (SD) card or an extreme digital (XD) card), a magnetic tape, a floppy disk, a magneto-optical data storage device, an optical data storage device, a hard disk, a solid state disk, and any other device configured to store a computer program and any associated data, data files and data structures in a non-transitory manner and provide the computer program and any associated data, data files and data structures to a processor or computer to enable the processor or computer to execute the computer program. In an example, the computer program and any associated data, data files and data structures are distributed on a networked computer system, so that the computer program and any associated data, data files and data structures are stored, accessed and executed in a distributed manner by one or more processors or computers.

Figure 4 is a block diagram illustrating a computer device according to an embodiment of the present disclosure.

As shown in Figure 4, the computer device 400 includes at least one memory 401 and at least one processor 402. The at least one memory 401 stores a set of computer-executable instructions. The set of computer-executable instructions, when executed by the at least one processor 402, implements the service life evaluation method for a wind turbine according to the embodiment of the present disclosure.

As an example, the computer device 400 may be a personal computer (PC), a tablet device, a personal digital assistant, a smart phone, or other device capable of executing the set of instructions as described above. The computer device 400 herein is not necessarily a single electronic device, and may also be any set of devices or circuits capable of individually or jointly executing the above instructions (or the set of instructions). The computer device 400 may also be a part of an integrated control system or a system manager, or may be configured as a portable electronic device that interfaces locally or remotely (for example, via wireless transmission).

In the computer device 400, the processor 402 may include a central processing unit (CPU), a graphics processing unit (GPU), a programmable logic device, a special purpose processor system, a microcontroller, or a microprocessor. By way of example rather than limitation, the processor may further include an analog processor, a digital processor, a microprocessor, a multi-core processor, a processor array, a network processor, or the like.

The processor 402 may run the instructions or codes stored in the memory 401, where the memory 401 may further store data. The instructions and data may also be transmitted and received over a network via a network interface device, where, the network interface device may employ any known transmission protocol.

The memory 401 may be integrated with the processor 402. For example, a RAM or flash memory may be provided within an integrated circuit microprocessor or the like. Additionally, the memory 401 may include separate devices, such as external disk drives, storage arrays, or any other storage devices that may be used by a database system. The memory 401 and the processor 402 may be operatively coupled, or may communicate with each other, for example, through I/O ports, network connections, or the like, to enable the processor 402 to read files stored in the memory.

In addition, the computer device 400 may also include a video display (such as a liquid crystal display) and a user interaction interface (such as a keyboard, a mouse, a touch input device, or the like). All components of the computer device 400 may be connected to each other via a bus and/or network. For example, the computer device may be a main control device in the SCADA system, a main control device in the wind turbine, or other independent devices capable of realizing the functions of the computer device according to the present disclosure, which is not limited herein. According to the present disclosure, the historical data including the historical operating data, which is meant to be acquired during the operation of the wind turbine, is used in evaluating the service life of the wind turbine. First, the historical data is classified to obtain historical data in different operating state categories and the time proportions of different operating state categories. Then, the equivalent fatigue load to which each operating state category corresponds is determined based on the historical data in each operating state category, and these equivalent fatigue loads are added together based on the time proportions, to obtain the equivalent fatigue load of the wind turbine, which comprehensively reflects the historical operation situation of the wind turbine. Finally, the consumed service life of the wind turbine is evaluated based on the equivalent fatigue load. The equivalent fatigue load corresponding to each of different operating states is determined separately, improving accuracy of the evaluation result. The equivalent fatigue loads are added together based on the time proportions, so that the evaluation results for different operating states can be effectively integrated, and on-site operating conditions can be analyzed by fully utilizing the field data of the wind turbine, which helps to improve the reliability of service life evaluation, providing a reference for the safety and a future development direction of on-site wind turbine.

The embodiments of the present disclosure are described in detail hereinabove. Although only some embodiments of the present disclosure are shown and described, it should be understood by those skilled in the art that, these embodiments can be modified and improved, without departing from the principle of the present disclosure which is defined by the claims.

**Claims**

1.   A service life evaluation method for a wind turbine, **characterized in that**, the method comprises:

acquiring (S101) historical data of the wind turbine over a target historical period, wherein the historical data comprises historical operating data;
performing (S102) classification on the historical operating data to classify the historical operating data into different operating state categories, and classifying other data in the historical data into operating state categories to which corresponding historical operating data belongs;
determining (S103), based on time information to which the historical operating data corresponds, a time proportion of each of the operating state categories and recording the time proportion as a first proportion;
determining (S104) an equivalent fatigue load corresponding to each operating state category based on historical data in each operating state category;
adding (S105) the equivalent fatigue loads corresponding to respective operating state categories together based on the first proportions to obtain an equivalent fatigue load of the wind turbine; and
determining (S106) a consumed service life of the wind turbine over the target historical period based on the equivalent fatigue load of the wind turbine.

2.   The service life evaluation method according to claim 1, wherein the adding (S105) the equivalent fatigue loads corresponding to respective operating state categories together based on the first proportions to obtain an equivalent fatigue load of the wind turbine comprises:

determining, for each of the operating state categories, a product of an m-th power of the equivalent fatigue load and the first proportion;
summing up the products corresponding to respective operating state categories to obtain a reference load, wherein m represents a material Wall coefficient of a target component of the wind turbine; and
determining a (1/m)-th power of the reference load as the equivalent fatigue load of the wind turbine.

3.   The service life evaluation method according to claim 1, wherein the determining (S104) an equivalent fatigue load corresponding to each operating state category based on historical data in each operating state category comprises:

selecting a first reference parameter from the historical data;
constructing, based on the historical data in each of the operating state categories, a plurality of parameter bins associated with different value intervals of the first reference parameter, wherein each of the plurality of parameter bins comprises a feature vector of the historical data corresponding to the first reference parameter in the value interval associated with the parameter bin; and
determining, for each of the operating state categories, the equivalent fatigue load corresponding to the operating state category based on the plurality of parameter bins.

4. The service life evaluation method according to claim 3, wherein the historical data further comprises historical wind resource data, the historical wind resource data is in temporal correspondence with the historical operating data, the historical wind resource data comprises a second reference parameter having a value corresponding relation with the first reference parameter,

wherein the classifying other data in the historical data into operating state categories to which corresponding historical operating data belongs comprises:

classifying the historical wind resource data into the operating state categories of the historical operating data in the temporal correspondence with the historical wind resource data;
wherein the constructing, based on the historical data in each of the operating state categories, a plurality of parameter bins associated with different value intervals of the first reference parameter comprises:

classifying, for each of the operating state categories, the historical operating data into bins according to different value intervals of the first reference parameter, to obtain a plurality of initial parameter bins;
determining, based on the value corresponding relation between the second reference parameter and the first reference parameter, a correspondence between the historical wind resource data and the plurality of initial parameter bins, and classifying the historical wind resource data into the plurality of initial parameter bins, to expand the plurality of initial parameter bins to obtain the plurality of parameter bins.

5. The service life evaluation method according to claim 3, wherein the determining, for each of the operating state categories, the equivalent fatigue load corresponding to the operating state category based on the plurality of parameter bins comprises:

performing simulation calculation for each parameter bin to obtain an equivalent fatigue load corresponding to each parameter bin;
determining, based on time information of historical data corresponding to each parameter bin, a time proportion of each parameter bin and record the time proportion as a second proportion; and
adding the equivalent fatigue loads of the respective parameter bins together based on the second proportions, to obtain the equivalent fatigue load corresponding to the operating state category.

6. The service life evaluation method according to claim 3, wherein the historical operating data comprises at least one of an impeller wind speed, a power, an impeller rotation speed, a generator torque, a pitch angle, a yaw angle, a failure number, and a failure type, and the first reference parameter is the impeller wind speed.

7. The service life evaluation method according to claim 1, wherein the performing (S102) classification on the historical operating data to classify the historical operating data into different operating state categories comprises:
performing clustering on at least part of the historical operating data, to classify the historical operating data into different operating state categories.

8. The service life evaluation method according to claim 7, wherein the at least part of the historical operating data comprises an impeller wind speed, a power, an impeller rotation speed, a generator torque and a pitch angle.

9. A service life evaluation device (300) for a wind turbine, **characterized in that**, the device comprises:

an acquisition unit (301), configured to acquire historical data of the wind turbine over a target historical period, wherein the historical data comprises historical operating data;
a classification unit (302), configured to perform classification on the historical operating data to classify the historical operating data into different operating state categories, and classify other data in the historical data into operating state categories to which corresponding historical operating data belongs;
a timing unit (303), configured to determine, based on time information to which the historical operating data corresponds, a time proportion of each of the operating state categories and record the time proportion of each of the operating state categories as a first proportion;
an equivalent unit (304), configured to determine an equivalent fatigue load corresponding to each operating state category based on the historical data in the operating state category;
an adding unit (305), configured to add the equivalent fatigue loads corresponding to respective operating state categories together based on the first proportions to obtain an equivalent fatigue load of the wind turbine; and
an evaluating unit (306), configured to determine a consumed service life of the wind turbine over the target historical period based on the equivalent fatigue load of the wind turbine.

10. A computer-readable storage medium, **characterized in that**, the when instructions stored in the computer-readable storage medium are executed by at least one processor, causing the at least one processor to perform the service life evaluation method according to any one of claims 1 to 8.

11. A computer device (400), **characterized in that**, the computer device comprises:

at least one processor (402),
at least one memory (401) for storing computer-executable instructions, wherein
the computer-executable instructions, when executed by the at least one processor (402), cause the at least one processor (402) to perform the service life evaluation method according to any one of claims 1 to 8.

12. The computer device according to claim 11, wherein the computer device (400) is a main control device in a data acquisition and supervisory control system or a main control device in the wind turbine.

**Patentansprüche**

1. Lebensdauerbewertungsverfahren für eine Windkraftanlage, **dadurch gekennzeichnet, dass** das Verfahren Folgendes umfasst:

Erfassen (S101) von Verlaufsdaten der Windkraftanlage über einen Zielverlaufszeitraum, wobei die Verlaufsdaten Verlaufsbetriebsdaten umfassen;
Durchführen (S102) einer Klassifikation der Verlaufsbetriebsdaten, um die Verlaufsbetriebsdaten in verschiedene Betriebszustandskategorien zu klassifizieren, und Klassifizieren anderer Daten in den Verlaufsdaten in Betriebszustandskategorien, zu denen entsprechende Verlaufsbetriebsdaten gehören;
Bestimmen (S103), basierend auf Zeitinformationen, denen die Verlaufsbetriebsdaten entsprechen, eines Zeitanteils jeder der Betriebszustandskategorien und Aufzeichnen des Zeitanteils als einen ersten Anteil;
Bestimmen (S104) einer Äquivalenzermüdungslast, die jeder Betriebszustandskategorie entspricht, basierend auf Verlaufsdaten in jeder Betriebszustandskategorie;
Addieren (S105) der Äquivalenzermüdungslasten, die den jeweiligen Betriebszustandskategorien entsprechen, miteinander basierend auf den ersten Anteilen, um eine Äquivalenzermüdungslast der Windkraftanlage zu erhalten; und
Bestimmen (S106) einer verbrauchten Lebensdauer der Windkraftanlage über den Zielverlaufszeitraum basierend auf der Äquivalenzermüdungslast der Windkraftanlage.

2. Lebensdauerbewertungsverfahren nach Anspruch 1, wobei das Addieren (S105) der Äquivalenzermüdungslasten, die den jeweiligen Betriebszustandskategorien entsprechen, miteinander basierend auf den ersten Anteilen, um eine Äquivalenzermüdungslast der Windkraftanlage zu erhalten, Folgendes umfasst:

Bestimmen, für jede der Betriebszustandskategorien, des Produkts aus einer m-ten Leistung der Äquivalenzermüdungslast und dem ersten Anteil;
Summieren der den jeweiligen Betriebszustandskategorien entsprechenden Produkte, um eine Referenzlast zu erhalten, wobei m einen Materialwandkoeffizienten einer Zielkomponente der Windkraftanlage darstellt; und
Bestimmen einer (1/m)-ten Leistung der Referenzlast als Äquivalenzermüdungslast der Windkraftanlage.

3. Lebensdauerbewertungsverfahren nach Anspruch 1, wobei das Bestimmen (S104) einer Äquivalenzermüdungslast, die jeder Betriebszustandskategorie entspricht, basierend auf Verlaufsdaten in jeder Betriebszustandskategorie Folgendes umfasst:

Auswählen eines ersten Referenzparameters aus den Verlaufsdaten;
Konstruieren, basierend auf den Verlaufsdaten in jeder der Betriebszustandskategorien, einer Vielzahl von Parameterklassen, die mit unterschiedlichen Werteintervallen des ersten Referenzparameters assoziiert sind, wobei jede der Vielzahl von Parameterklassen einen Merkmalsvektor der Verlaufsdaten umfasst, der dem ersten Referenzparameter in dem mit der Parameterklasse assoziierten Werteintervall entspricht; und
Bestimmen, für jede der Betriebszustandskategorien, der Äquivalenzermüdungslast, die der Betriebszustandskategorie entspricht, basierend auf der Vielzahl von Parameterklassen.

4. Lebensdauerbewertungsverfahren nach Anspruch 3, wobei die Verlaufsdaten ferner Verlaufswindressourcendaten umfassen, wobei die Verlaufswindressourcendaten in zeitlicher Entsprechung mit den Verlaufsbetriebsdaten stehen, wobei die Verlaufswindressourcendaten einen zweiten Referenzparameter umfassen, der eine Wertentsprechungsbeziehung mit dem ersten Referenzparameter aufweist,

wobei das Klassifizieren anderer Daten in den Verlaufsdaten in Betriebszustandskategorien, zu denen entsprechende Verlaufsbetriebsdaten gehören, Folgendes umfasst:

Klassifizieren der Verlaufswindressourcendaten in die Betriebszustandskategorien der Verlaufsbetriebsdaten in zeitlicher Entsprechung mit den Verlaufswindressourcendaten;

wobei das Konstruieren, basierend auf den Verlaufsdaten in jeder der Betriebszustandskategorien, einer Vielzahl von Parameterklassen, die mit unterschiedlichen Werteintervallen des ersten Referenzparameters assoziiert sind, Folgendes umfasst:

Klassifizieren, für jede der Betriebszustandskategorien, der Verlaufsbetriebsdaten in Klassen gemäß unterschiedlichen Werteintervallen des ersten Referenzparameters, um eine Vielzahl von anfänglichen Parameterklassen zu erhalten;

Bestimmen, basierend auf der Wertentsprechungsbeziehung zwischen dem zweiten Referenzparameter und dem ersten Referenzparameter, einer Entsprechung zwischen den Verlaufswindressourcendaten und der Vielzahl von anfänglichen Parameterklassen und Klassifizieren der Verlaufswindressourcendaten in die Vielzahl von anfänglichen Parameterklassen, um die Vielzahl von anfänglichen Parameterklassen zu erweitern, um die Vielzahl von Parameterklassen zu erhalten.

5. Lebensdauerbewertungsverfahren nach Anspruch 3, wobei das Bestimmen, für jede der Betriebszustandskategorien, der Äquivalenzermüdungslast, die der Betriebszustandskategorie entspricht, basierend auf der Vielzahl von Parameterklassen Folgendes umfasst:

Durchführen einer Simulationsberechnung für jede Parameterklasse, um eine Äquivalenzermüdungslast zu erhalten, die jeder Parameterklasse entspricht;

Bestimmen, basierend auf Zeitinformationen von Verlaufsdaten, die jeder Parameterklasse entsprechen, eines Zeitanteils jeder Parameterklassen und Aufzeichnen des Zeitanteils als einen zweiten Anteil; und

Addieren der Äquivalenzermüdungslasten der jeweiligen Parameterklassen basierend auf den zweiten Anteilen, um die Äquivalenzermüdungslast zu erhalten, die der Betriebszustandskategorie entspricht.

6. Lebensdauerbewertungsverfahren nach Anspruch 3, wobei die Verlaufsbetriebsdaten mindestens eines von einer Flügelradwindgeschwindigkeit, einer Leistung, einer Flügelraddrehzahl, einem Generatormoment, einem Nickwinkel, einem Gierwinkel, einer Fehleranzahl und einer Fehlerart umfassen und der erste Referenzparameter die Flügelradwindgeschwindigkeit ist.

7. Lebensdauerbewertungsverfahren nach Anspruch 1, wobei das Durchführen (S102) einer Klassifizierung der Verlaufsbetriebsdaten, um die Verlaufsbetriebsdaten in verschiedene Betriebszustandskategorien zu klassifizieren, Folgendes umfasst:

Durchführen von Clustering an mindestens einem Teil der Verlaufsbetriebsdaten, um die Verlaufsbetriebsdaten in verschiedene Betriebszustandskategorien zu klassifizieren.

8. Lebensdauerbewertungsverfahren nach Anspruch 7, wobei der mindestens eine Teil der Verlaufsbetriebsdaten eine Flügelradwindgeschwindigkeit, eine Leistung, eine Flügelraddrehzahl, ein Generatormoment und einen Nickwinkel umfasst.

9. Lebensdauerbewertungsvorrichtung (300) eine Windkraftanlage, **dadurch gekennzeichnet, dass** die Vorrichtung Folgendes umfasst:

eine Erfassungseinheit (301), die zum Erfassen von Verlaufsdaten der Windkraftanlage über einen Zielverlaufszeitraum konfiguriert ist, wobei die Verlaufsdaten Verlaufsbetriebsdaten umfassen;

eine Klassifikationseinheit (302), die zum Durchführen einer Klassifikation der Verlaufsbetriebsdaten, um die Verlaufsbetriebsdaten in verschiedene Betriebszustandskategorien zu klassifizieren, und Klassifizieren anderer Daten in den Verlaufsdaten in Betriebszustandskategorien, zu denen entsprechende Verlaufsbetriebsdaten gehören, konfiguriert ist;

eine Zeiterfassungseinheit (303), die zum Bestimmen, basierend auf Zeitinformationen, denen die Verlaufsbetriebsdaten entsprechen, eines Zeitanteils jeder der Betriebszustandskategorien und Aufzeichnen des Zeitanteils jeder der Betriebszustandskategorien als einen ersten Anteil konfiguriert ist;
eine Äquivalenzeinheit (304), die zum Bestimmen einer Äquivalenzermüdungslast, die jeder Betriebszustandskategorie entspricht, basierend auf den Verlaufsdaten in der Betriebszustandskategorie konfiguriert ist;
eine Additionseinheit (305), die zum Addieren der Äquivalenzermüdungslasten, die den jeweiligen Betriebszustandskategorien entsprechen, miteinander basierend auf den ersten Anteilen, um eine Äquivalenzermüdungslast der Windkraftanlage zu erhalten, konfiguriert ist; und
eine Bewertungseinheit (306), die zum Bestimmen einer verbrauchten Lebensdauer der Windkraftanlage über den Zielverlaufszeitraum basierend auf der Äquivalenzermüdungslast der Windkraftanlage konfiguriert ist.

10. Computerlesbares Speichermedium, **dadurch gekennzeichnet, dass** bei Ausführung von in dem computerlesbaren Speichermedium gespeicherten Anweisungen durch mindestens einem Prozessor der mindestens eine Prozessor veranlasst wird, das Lebensdauerbewertungsverfahren nach einem der Ansprüche 1 bis 8 durchzuführen.

11. Computervorrichtung (400), **dadurch gekennzeichnet, dass** die Computervorrichtung Folgendes umfasst:

mindestens einen Prozessor (402),
mindestens einen Speicher (401) zum Speichern computerausführbarer Anweisungen, wobei
die computerausführbaren Anweisungen bei Ausführung durch den mindestens einen Prozessor (402) den mindestens einen Prozessor (402) veranlassen, das Lebensdauerbewertungsverfahren nach einem der Ansprüche 1 bis 8 durchzuführen.

12. Computervorrichtung nach Anspruch 11, wobei die Computervorrichtung (400) eine Hauptsteuervorrichtung in einem Datenerfassungs- und Überwachungssteuersystem oder eine Hauptsteuervorrichtung in der Windkraftanlage ist.

**Revendications**

1. Procédé d'évaluation de la durée de vie d'une éolienne, **caractérisé en ce que** le procédé comprend :

acquérir (S101) des données historiques de l'éolienne sur une période historique cible, les données historiques comprenant des données de fonctionnement historiques ;
réaliser (S102) une classification sur les données de fonctionnement historiques pour classer les données de fonctionnement historiques dans différentes catégories d'état de fonctionnement, et classer d'autres données dans les données historiques dans des catégories d'état de fonctionnement auxquelles appartiennent les données de fonctionnement historiques correspondantes ;
déterminer (S103), en se basant sur les informations temporelles auxquelles correspondent les données de fonctionnement historiques, une proportion temporelle de chacune des catégories d'état de fonctionnement et enregistrer la proportion temporelle en tant que première proportion ;
déterminer (S104) une charge de fatigue équivalente correspondant à chaque catégorie d'état de fonctionnement en se basant sur les données historiques dans chaque catégorie d'état de fonctionnement ;
additionner (S105) les charges de fatigue équivalentes correspondant aux catégories d'état de fonctionnement respectives en se basant sur les premières proportions pour obtenir une charge de fatigue équivalente de l'éolienne ; et
déterminer (S106) une durée de vie consommée de l'éolienne sur la période historique cible en se basant sur la charge de fatigue équivalente de l'éolienne.

2. Procédé d'évaluation de la durée de vie de la revendication 1, dans lequel le fait d'ajouter (S105) les charges de fatigue équivalentes correspondant à des catégories d'état de fonctionnement respectives en se basant sur les premières proportions pour obtenir une charge de fatigue équivalente de l'éolienne comprend :

déterminer, pour chacune des catégories d'état de fonctionnement, le produit d'une m-ième puissance de la charge de fatigue équivalente et de la première proportion ;
additionner les produits correspondant aux catégories d'état de fonctionnement respectives pour obtenir une charge de référence, m représentant un coefficient de paroi de matériau d'un composant cible de l'éolienne ; et
déterminer une (1/m)-ième puissance de la charge de référence comme charge de fatigue équivalente de l'éolienne.

3. Procédé d'évaluation de la durée de vie de la revendication 1, dans lequel la détermination (S104) d'une charge de fatigue équivalente correspondant à chaque catégorie d'état de fonctionnement, basée sur des données historiques dans chaque catégorie d'état de fonctionnement, comprend :

> sélectionner un premier paramètre de référence à partir des données historiques ;
> construire, sur la base des données historiques dans chacune des catégories d'état de fonctionnement, une pluralité de groupes de paramètres associés à différents intervalles de valeurs du premier paramètre de référence, chacun de la pluralité de groupes de paramètres comprenant un vecteur de caractéristiques des données historiques correspondant au premier paramètre de référence dans l'intervalle de valeurs associé au groupe de paramètres ; et
> déterminer, pour chacune des catégories d'état de fonctionnement, la charge de fatigue équivalente correspondant à la catégorie d'état de fonctionnement en se basant sur la pluralité de groupes de paramètres.

4. Procédé d'évaluation de la durée de vie de la revendication 3, dans lequel les données historiques comprennent en outre des données historiques sur les ressources éoliennes, les données historiques sur les ressources éoliennes sont en correspondance temporelle avec les données historiques de fonctionnement, les données historiques sur les ressources éoliennes comprennent un second paramètre de référence ayant une relation de correspondance de valeur avec le premier paramètre de référence,
dans lequel la classification d'autres données dans les données historiques en catégories d'état de fonctionnement auxquelles appartiennent les données de fonctionnement historiques correspondantes comprend :

> classer les données historiques sur les ressources éoliennes dans les catégories d'état de fonctionnement des données historiques de fonctionnement en correspondance temporelle avec les données historiques sur les ressources éoliennes ;
> dans lequel la construction, sur la base des données historiques dans chacune des catégories d'état de fonctionnement, d'une pluralité de groupes de paramètres associés à différents intervalles de valeurs du premier paramètre de référence comprend :
> classer, pour chacune des catégories d'état de fonctionnement, les données de fonctionnement historiques en groupes selon différents intervalles de valeurs du premier paramètre de référence, afin d'obtenir une pluralité de groupes de paramètres initiaux ;
> déterminer, en se basant sur la relation de correspondance de valeur entre le second paramètre de référence et le premier paramètre de référence, une correspondance entre les données historiques de ressources éoliennes et la pluralité de groupes de paramètres initiaux, et classer les données historiques de ressources éoliennes dans la pluralité de groupes de paramètres initiaux, afin d'étendre la pluralité de groupes de paramètres initiaux pour obtenir la pluralité de groupes de paramètres.

5. Procédé d'évaluation de la durée de vie de la revendication 3, dans lequel la détermination, pour chacune des catégories d'état de fonctionnement, de la charge de fatigue équivalente correspondant à la catégorie d'état de fonctionnement en se basant sur la pluralité de groupes de paramètres comprend :

> réaliser un calcul de simulation pour chaque groupe de paramètres afin d'obtenir une charge de fatigue équivalente correspondant à chaque groupe de paramètres ;
> déterminer, en se basant sur les informations temporelles des données historiques correspondant à chaque groupe de paramètres, une proportion temporelle de chaque groupe de paramètres et enregistrer la proportion temporelle comme une seconde proportion ; et
> additionner les charges de fatigue équivalentes des groupes de paramètres respectifs en se basant sur les seconds proportions pour obtenir la charge de fatigue équivalente correspondant à la catégorie d'état de fonctionnement.

6. Procédé d'évaluation de la durée de vie de la revendication 3, dans lequel les données de fonctionnement historiques comprennent au moins un d'une vitesse de vent de roue, d'une alimentation, d'une vitesse de rotation de roue, d'un couple de générateur, d'un angle de tangage, d'un angle de lacet, d'un numéro de défaillance et d'un type de défaillance, et le premier paramètre de référence est la vitesse de vent de roue.

7. Procédé d'évaluation de la durée de vie de la revendication 1, dans lequel la réalisation (S102) de la classification sur les données de fonctionnement historiques pour classer les données de fonctionnement historiques dans différentes catégories d'état de fonctionnement comprend :

> effectuer un regroupement sur au moins une partie des données de fonctionnement historiques, afin de classer les données de fonctionnement historiques dans différentes catégories d'état de fonctionnement.

8. Procédé d'évaluation de la durée de vie de la revendication 7, dans lequel l'au moins une partie des données de fonctionnement historiques comprend une vitesse de vent de roue, une alimentation, une vitesse de rotation de roue, un couple de générateur et un angle de tangage.

9. Dispositif d'évaluation de la durée de vie (300) d'une éolienne, **caractérisé en ce que** le dispositif comprend :

une unité d'acquisition (301), configurée pour acquérir des données historiques de l'éolienne sur une période historique cible, les données historiques comprenant des données de fonctionnement historiques ;
une unité de classification (302), configurée pour réaliser une classification sur les données de fonctionnement historiques pour classer les données de fonctionnement historiques dans différentes catégories d'état de fonctionnement, et pour classer d'autres données dans les données historiques dans des catégories d'état de fonctionnement auxquelles appartiennent les données de fonctionnement historiques correspondantes ;
une unité de synchronisation (303), configurée pour déterminer, en se basant sur les informations temporelles auxquelles correspondent les données de fonctionnement historiques, une proportion temporelle de chacune des catégories d'état de fonctionnement et enregistrer la proportion temporelle de chacune des catégories d'état de fonctionnement comme une première proportion ;
une unité équivalente (304), configurée pour déterminer une charge de fatigue équivalente correspondant à chaque catégorie d'état de fonctionnement en se basant sur les données historiques dans la catégorie d'état de fonctionnement ;
une unité d'ajout (305), configurée pour ajouter les charges de fatigue équivalentes correspondant aux catégories d'état de fonctionnement respectives en se basant sur les premières proportions pour obtenir une charge de fatigue équivalente de l'éolienne ; et
une unité d'évaluation (306), configurée pour déterminer une durée de vie consommée de l'éolienne sur la période historique cible, en se basant sur la charge de fatigue équivalente de l'éolienne.

10. Support de stockage lisible par ordinateur, **caractérisé en ce que**, lorsque les instructions stockées dans le support de stockage lisible par ordinateur sont exécutées par au moins un processeur, les instructions amènent l'au moins un processeur à exécuter le procédé d'évaluation de la durée de vie de l'une quelconque des revendications 1 à 8.

11. Dispositif informatique (400), **caractérisé en ce que** le dispositif informatique comprend :

au moins un processeur (402),
au moins une mémoire (401) pour stocker des instructions exécutables par ordinateur, dans lequel
les instructions exécutables par ordinateur, lorsqu'elles sont exécutées par l'au moins un processeur (402), amènent l'au moins un processeur (402) à exécuter le procédé d'évaluation de la durée de vie de l'une quelconque des revendications 1 à 8.

12. Dispositif informatique de la revendication 11, dans lequel le dispositif informatique (400) est un dispositif de commande principal dans un système d'acquisition de données et de commande de supervision ou un dispositif de commande principal dans l'éolienne.

Acquire historical data of a wind turbine generator system over a target historical period, where the historical data includes historical operating data     S101

↓

Perform classification on the historical operating data to classify the historical operating data into different operating state categories, and classifying other data in the historical data into operating state categories to which corresponding historical operating data belongs     S102

↓

Determine, based on time information to which the historical operating data corresponds, a time proportion of each of the operating state categories, and record as a first proportion     S103

↓

Determine an equivalent fatigue load corresponding to each operating state category based on historical data in each operating state category     S104

↓

Add the equivalent fatigue loads corresponding to respective operating state categories based on the first proportions to obtain an equivalent fatigue load of the wind turbine     S105

↓

Determine a consumed service life of the wind turbine over the target historical period based on the equivalent fatigue load of the wind turbine     S106

## Figure 1

Figure 2

300

| | |
|---|---|
| Acquisition unit — 301 | Equivalent unit — 304 |
| Classification unit — 302 | Adding unit — 305 |
| Timing unit — 303 | Evaluating unit — 306 |

**Figure 3**

400

| |
|---|
| Memory — 401 |
| Processor — 402 |

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020200421 A1

- CN 112131753 A